(19) Europäisches Patentamt
European Patent Office
Office européen des brevets

(11) **EP 2 789 914 A1**

(12) **EUROPÄISCHE PATENTANMELDUNG**

(43) Veröffentlichungstag:
**15.10.2014 Patentblatt 2014/42**

(51) Int Cl.:
*F23N 5/16* (2006.01)    *F23N 5/24* (2006.01)

(21) Anmeldenummer: **13163529.4**

(22) Anmeldetag: **12.04.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Flohr, Patrick Ronald**
**45478 Mülheim a.d. Ruhr (DE)**

(54) **Verfahren zur Überwachung eines Flammenzustands**

(57)    Ein Verfahren (1) zur Überwachung eines Flammenzustands in einer Brennkammer (104) einer Gasturbine (101), wobei in einem Druckeinflussbereich eines Brenners (2) der Brennkammer (104) ein erster dynamischer Drucksensor (4) angeordnet ist und ein Signal des ersten Drucksensors (4) in einem ersten Zeitabschnitt ermittelt wird, soll eine zuverlässigere und genauere Detektion des Flammenzustands für jede einzelne Flamme in der Brennkammer einer Gasturbine erlauben. Dazu wird ein Signal eines zweiten dynamischen Drucksensors (4) in einem zweiten Zeitabschnitt ermittelt, eine für die lineare Abhängigkeit der beiden ermittelten Signale charakteristische Wertzahl ermittelt, und bei Unterschreiten eines ersten vorgegebenen Grenzwerts durch die Wertzahl ein Erlöschen und/oder bei Überschreiten eines zweiten vorgegebenen Grenzwerts ein Zündender Flamme des Brenners (2) festgestellt.

FIG 7

$$R_{xy} = \frac{C_{xy}}{\sqrt{C_{xx} \cdot C_{yy}}}$$

$$R_{xy}(m) = \sum_{n=0}^{N-m-1} x_n y_{n-m}$$

$$m = 0$$

EP 2 789 914 A1

**Beschreibung**

Die Erfindung betrifft ein Verfahren zur Überwachung eines Flammenzustands in einer Brennkammer einer Gasturbine, wobei in einem Druckeinflussbereich eines Brenners der Brennkammer ein erster dynamischer Drucksensor angeordnet ist und ein Signal des ersten Drucksensors in einem ersten Zeitabschnitt ermittelt wird. Sie betrifft weiter eine Gasturbine mit einem in einem Flammaustrittsbereich eines Brenners einer Brennkammer angeordneten ersten dynamischen Drucksensor.

Eine Gasturbine ist eine Strömungsmaschine, in der ein unter Druck stehendes Gas expandiert. Sie besteht aus einer Turbine oder Expander, einem vorgeschalteten Verdichter und einer zwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt. Außerdem wird die Luft in ein Sekundärluftsystem geführt und zur Kühlung insbesondere thermisch stark beanspruchter Bauteile eingesetzt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Üblicherweise ist eine Mehrzahl von ringförmig um die Turbinenachse angeordneten Brennern mit entsprechenden Einspritzdüsen für Treibstoff vorgesehen. Dabei können die Brenner in Einzelbrennkammern, so genannten Baskets angeordnet sein, die erst kurz vor dem Eintritt in die Turbine verbunden sind (sogenannte can- oder can-annular-Bauweise), oder in einem ringförmigen gemeinsamen Brennraum angeordnet sein (sogenannte annular-Bauweise). In der jeweiligen Brennkammer wird das Treibstoff-Luft-Gemisch beim Start der Gasturbine durch Zünder entflammt. Anschließend erfolgt die Verbrennung kontinuierlich.

Die kontinuierliche Überwachung der Flamme insbesondere bei der can- oder can-annular-Bauweise in jeder einzelnen Brennkammer ist für die betriebliche Sicherheit der Gasturbine wichtig, um gefährliche Situationen durch den Eintritt von unverbranntem Treibstoff in der Brennkammer oder dem Turbinenaustritt zu vermeiden. Die Überwachung des Flammenzustands muss hierbei schnell erfolgen, damit keine gefährlichen Luft-Brennstoffgemische über einen längeren Zeitraum entstehen. Reaktionszeiten von unter einer Sekunde sind wünschenswert. Insbesondere muss die Zündung und die Auslöschung von Flammen zu jeder Zeit zuverlässig erkannt werden, gerade auch in Situationen wie einem Lastabwurf, beim Herunterfahren der Gasturbine, oder bei teilweisem Erlöschen einzelner Flammen.

Zur Überwachung des Flammenzustands sind optische und temperaturbasierte Systeme bekannt. Optische Systeme messen das emittierte Lichte der Flamme direkt und sind typischerweise vergleichsweise schnell. Nachteilig bei derartigen Systemen ist jedoch die Anfälligkeit der optischen Komponenten für Verschmutzung durch Partikel, Staub, Ruß, Öl, sowie Wasser und Kondensation. Die Verschmutzung verringert die Fähigkeiten zur Flammendetektion solcher Systeme sowie deren Zuverlässigkeit und Betriebsbereitschaft.

Alternativ zu derartigen optischen Systemen wurden daher Systeme entwickelt, die auf der dynamischen Messung des Drucks im Druckeinflussbereich basieren. Ein derartiges System ist beispielsweise in der US 7,853,433 B2 beschrieben. Hier ist im Druckeinflussbereich jedes Brenners ein piezoelektrischer Drucksensor angeordnet. Das zeitliche Signal des Drucksensors wird digitalisiert und einer Wavelet-Analyse unterzogen. Die Wavelet-Analyse ermöglicht das Erkennen des Flammenzustands und eines Flammenrückschlags durch den Vergleich der normierten Amplituden der Wavelet-Koeffizienten mit vorbestimmten Grenzamplituden. Die Signale werden hierbei mit dem Mittelwert aller Brenner normiert, wodurch der Grenzwert festgelegt wird. Eine Überschreitung dieser Grenzwerte bedeutet eine Abweichung vom Normalzustand und damit eine Änderung des Flammenzustands, entweder das Zünden oder Erlöschen der Flamme oder einen Flammenrückschlag.

Die in der US 7,853,433 B2 beschriebene Methode hat jedoch den Nachteil, dass bestimmte Flammenzustände nicht erkannt werden. Beispielsweise wird ein Erlöschen aller Brennerflammen nicht erkannt. Weiterhin kommt es häufig zu Fehlerkennungen (Flamme an/aus) bei der Feststellung des Flammenzustands.

Es ist daher Aufgabe der Erfindung, ein Verfahren der eingangs genannten Art anzugeben, welches eine zuverlässigere und genauere Detektion des Flammenzustands für jede einzelne Flamme in der Brennkammer einer Gasturbine erlaubt.

Diese Aufgabe wird erfindungsgemäß gelöst, indem ein Signal eines zweiten dynamischen Drucksensors in einem zweiten Zeitabschnitt ermittelt wird, eine für die lineare Abhängigkeit der beiden ermittelten Signale charakteristische Wertzahl ermittelt wird, und bei Unterschreiten eines ersten vorgegebenen Grenzwerts durch die Wertzahl ein Erlöschen und/oder bei Überschreiten eines zweiten vorgegebenen Grenzwerts ein Zünden der Flamme des Brenners festgestellt wird.

Die Erfindung geht dabei von der Überlegung aus, dass die Probleme der im Stand der Technik bekannten Methoden insbesondere von der verwendeten Normierung über den Mittelwert aller Brenner als Referenzwert her rühren. Bei einem Ausfall der Hälfte der Brennerflammen kann das System dadurch beispielsweise nicht mehr entscheiden, ob ein normaler oder abnormaler Wert am einzelnen Brenner vorliegt. Beim Erlöschen aller Flammen wird überhaupt kein Fehler erkannt. Generell scheint die Überwachung der Quadratmittelwerte in bestimmten Frequenzbändern der Druckoszillationen ungeeignet, da es häufig zu Anstiegen oder Absenkungen der Druckamplituden durch Rauschen und Übersprecheffekte mit den anderen Brennern kommt.

Aus diesem Grund sollte eine alternative Beurteilungsgröße hinsichtlich der Druckoszillationen gefunden werden. Hierbei wurde erkannt, dass eine brennende Flamme hochkohärente Druckoszillationen verursacht, während die Druckoszillationen des Luftstroms ohne Flamme weitestgehend unkorreliert sind. Diese kohärenten Signale sorgen dafür, dass die Zeitsignale der Drucksensoren bei brennender Flamme unabhängig von der Amplitude, d. h. der Stärke der flammenabhängigen Druckschwankungen eine hohe lineare Abhängigkeit aufweisen. Daher sollte die lineare Abhängigkeit der Drucksignale als Messgröße für den Flammenzustand verwendet werden. Hierfür wird ein Signal eines weiteren Drucksensors ermittelt und mit dem ersten Drucksensorsignal verglichen. Eine für die lineare Abhängigkeit charakteristische Wertzahl wird ermittelt und ein Grenzwert festgelegt. Sobald die Wertzahl den Grenzwert unterschreitet, d. h. die Druckoszillationen über ein bestimmtes Maß hinaus unkorreliert werden, wird ein Erlöschen der Flamme festgestellt und in einer Steuereinheit entsprechend gemeldet, so dass hier notwendige Schritte veranlasst werden können.

In vorteilhafter Ausgestaltung wird dabei bei der Ermittlung der Wertzahl der Korrelationskoeffizient der beiden ermittelten Signale berechnet. Der Korrelationskoeffizient ist ein besonders einfaches Maß für die lineare Abhängigkeit der Zeitsignale aus den Drucksensoren und berechnet sich aus der Kovarianz der beiden Signale geteilt durch das Produkt der jeweiligen Standardabweichungen, wobei die Standardabweichung die Wurzel der jeweiligen Varianz eines Signals ist. Der Korrelationskoeffizient ermöglicht durch seine Normierung eine besonders einfache Festlegung eines Grenzwertes für das Feststellen des Flammenzustands.

Vorteilhafterweise überlappen der erste und der zweite Zeitabschnitt, deren beiden Signale miteinander verglichen werden, zumindest teilweise, insbesondere sind die Zeitabschnitte gleich. Grundsätzlich können theoretisch auch nicht übereinstimmende Zeitabschnitte auf eine entsprechende Korrelation hin untersucht werden, da die Verbrennung kontinuierlich abläuft. Hierbei kann beispielsweise auch eine Autokorrelation aufeinanderfolgender Signale desselben Sensors errechnet werden. Jedoch ergibt sich bei der Verwendung der Signale unterschiedlicher Sensoren in gleichen Zeitabschnitten eine verbesserte Messqualität.

In vorteilhafter Ausgestaltung des Verfahrens ist der erste und/oder zweite Zeitabschnitt kürzer als 1 s, insbesondere zwischen 0,3 und 0,6 s lang. Eine Reaktion des Systems und das Feststellen einer Änderung des Flammenzustands können nämlich mit dem beschriebenen Verfahren nur periodisch nach Abschluss eines Zeitabschnitts und der Auswertung der dort erhobenen Daten erfolgen. Da für die betriebliche Sicherheit der Gasturbine bei einem Erlöschen der Flamme Reaktionszeiten von unter einer Sekunde erforderlich sind, sollte die Messung des jeweiligen Zeitabschnitts entsprechend kürzer sein. Eine zu kurze Messzeit verringert jedoch unter Umständen die Aussagekraft aufgrund der mangelnden Statistik und kann technisch schwer zu realisieren sein. Daher sollte vorteilhaft eine Messdauer von 0,3 bis 0,6 s vorgesehen sein.

Vorteilhafterweise werden die Signale digitalisiert, d. h. es findet ein Wandlung der analogen Signale der Drucksensoren in digitale statt. Dies ermöglicht eine einfache, schnelle und technisch einfach zu realisierende Analyse der Signale der Drucksensoren.

Dabei sollte die Frequenz der Digitalisierung, d. h. die Abtastfrequenz des analogen Signals vorzugsweise mehr als 10 kHz, insbesondere mehr als 20 kHz betragen. Die Qualität des digitalisierten Signals liegt höher, je höher die Abtastfrequenz ist. Hierbei sollte bei der Analyse des Flammenzustands darauf geachtet werden, dass die relevanten Frequenzbereiche von durch Flammen verursachte Oszillationen innerhalb des Frequenzbereiches liegen, was durch die genannten Frequenzen erreicht wird.

In weiterer vorteilhafter Ausgestaltung des Verfahrens werden aus dem ersten und/oder dem zweiten Signal für den Flammenzustand nicht charakteristische Frequenzbereiche ausgefiltert. Dies erhöht die Qualität der Signalverarbeitung, da unrelevante Frequenzbereiche bei der Berechnung des Korrelationskoeffizienten keine Beiträge mehr liefern. Jeglicher Informationsgehalt, der nicht mit der Verbrennung in Verbindung steht, wird eliminiert.

Vorteilhafterweise werden hierbei Frequenzbereiche unterhalb von 80 Hz und/oder oberhalb von 350 Hz, insbesondere oberhalb von 600 Hz ausgefiltert. Die Frequenzbereiche sind anpassbar, jedoch sind die genannten Frequenzbereiche insbesondere mit der Verbrennung in der Flamme assoziiert. Die Filterung kann mittels eines Bandpassfilters für jedes Signal getrennt erfolgen.

In weiterer vorteilhafter Ausgestaltung werden weiterhin Frequenzbereiche ausgefiltert, in denen die Kohärenz der beiden ermittelten Signale unterhalb eines vorgegebenen Kohärenzgrenzwerts, insbesondere 0,8 liegt. Hierdurch werden die Frequenzbereiche ausgewählt, die das Flammensignal am besten repräsentieren. Die Zeitsignale der beiden Drucksensoren werden mittels einer Fast-Fourier-Transformation (FFT) in den Frequenzraum transformiert. Hier werden das Kreuzleistungsspektrum und die Autoleistungsspektren der Signale ermittelt und die Kohärenzfunktion ermittelt, die das mit den Autoleistungsspektren normierte Kreuzleistungsspektrum darstellt. Hierbei werden vorteilhaft Frequenzbereiche ausgefiltert, deren Kohärenz unterhalb von 0,8 liegt, d. h. ihre Amplituden werden auf 0 gesetzt.

Dann wird das Signal in den Zeitraum zurück transformiert. Hierdurch wird eine optimierte Signalfilterung zur Ermittlung des optimalen Signals ermöglicht. Für bekannte Verbrennungsmuster in der Flamme können durch das genannte Verfahren optimierte Frequenzbereiche ermittelt werden und durch entsprechende Filter bereits im Zeitraum ausgefiltert werden.

Vorteilhafterweise liegt der Grenzwert für den Korrelationskoeffizient, unterhalb dessen ein Erlöschen der Flamme festgestellt wird, niedriger als 0,4, insbesondere niedriger als 0,2. Der Korrelationskoeffizient bei brennenden Flammen liegt typischerweise oberhalb dieses Wertes, während er bei einer erlöschenden Flamme unter 0,2 sinkt. Daher ist durch einen entsprechend gewählten Grenzwert der Flammenzustand erkennbar.

In vorteilhafter alternativer Ausgestaltung des Verfahrens wird bei der Ermittlung der Wertzahl der Korrelationskoeffizient mit dem quadratischen Mittel des ersten und/oder des zweiten ermittelten Signals normiert. Hiermit wird dem Fakt Rechnung getragen, dass ein Brenner mit erloschener Flamme typischerweise Druckoszillationen mit wesentlich geringeren Amplituden, d. h. geringeren quadratischen Mitteln aufweist. Die Kombination von quadratischem Mittel und geringer Kreuzkorrelation produziert besonders geringe Werte bei einer erloschenen Flamme und ermöglicht es so, noch besser zwischen verschiedenen Flammenzuständen zu unterscheiden. Dies verbessert die Genauigkeit der Detektion weiter.

Eine Gasturbine mit einem in einem Druckeinflussbereich eines Brenners einer Brennkammer angeordneten ersten dynamischen Drucksensor, weist vorteilhafterweise einen zweiten dynamischer Drucksensor sowie eine Steuereinrichtung auf, die zum Durchführen des beschriebenen Verfahrens ausgelegt ist.

In der Gasturbine ist der zweite Drucksensor, der für die Vergleichsmessung verwendet wird, vorteilhafterweise im Druckeinflussbereich eines dem Brenner benachbarten zweiten Brenners angeordnet. Eine derartige Anordnung ermöglicht es, über den Vergleich mit den jeweils benachbarten Brennern der Flammenzustand jedes einzelnen Brenners zu ermitteln. Es ist kein Rückgriff auf Größen erforderlich, die sich auf einen Mittelwert aller Sensoren an allen Brennern beziehen und damit eine individuelle genaue Erkennung des Flammenzustands für jeden Brenner möglich.

Um die individuelle Erkennung des Flammenzustands noch weiter zu verbessern, ist der zweite Drucksensor vorteilhafterweise in dem Druckeinflussbereich desselben Brenners angeordnet. Mit anderen Worten: Im Druckeinflussbereich jedes Brenners, der mit dem Verfahren überwacht werden soll, sind zwei Drucksensoren angeordnet. Dadurch ist überhaupt kein Rückgriff auf Vergleichswerte anderer Brennerflammen mehr nötig, sondern es kann durch die Analyse der Druckoszillationen an zwei Stellen innerhalb desselben Druckeinflussbereichs und deren linearer Abhängigkeit individuell für jede Brennerflamme eine Aussage hinsichtlich ihres Zustands getroffen werden.

Vorteilhafterweise umfasst eine Kraftwerksanlage eine derartige Gasturbine.

Die mit der Erfindung erzielten Vorteile bestehen insbesondere darin, dass durch die Berechnung der Korrelationen der dynamischen Drucksignale in Gasturbinenbrennkammern eine besonders zuverlässiges Verfahren geschaffen wird, den Flammenstatus in der Zündphase und dem laufenden Betrieb der Gasturbine zu überwachen. Das Verfahren funktioniert unabhängig für jeden einzelnen Brenner und beruht nicht auf vorab bekannten Daten wie z. B. charakteristischen Frequenzen, Variationen oder Moden in Frequenzmustern, aus Modellrechnungen vorhergesagt wurden. Dadurch kann z. B. auch ein Erlöschen aller Flammen der Brennkammer zuverlässig erkannt werden.

Durch das beschriebene Verfahren können bisherige auf optischen oder thermischen Sensoren basierende Systeme entfallen. Daher weist das System auch eine höhere Zuverlässigkeit auf, da Drucksensoren robust gegen Verschmutzung und Kontamination sind. In Gasturbinen, in denen bereits jetzt Drucksensoren zur Strömungsdynamikanalyse verwendet werden, ist das Verfahren unter Umständen ohne zusätzliche Hardware realisierbar, sondern kann in vorhandenen Steuereinheiten softwareseitig implementiert werden.

Der gezeigte Algorithmus ist zudem schneller als bisher bekannte Algorithmen zur Flammendetektion. Er benötigt keine sonstigen Eingangsdaten wie z. B. ein Signal für den Zündzeitpunkt, die Wellengeschwindigkeit u. a.

Die Erfindung wird anhand eines in einer Zeichnung dargestellten Ausführungsbeispiels näher erläutert. Darin zeigen:

FIG 1     Zeitsignale zweier dynamischer Drucksensoren im Flammenaustrittsbereich eines Brenners,

FIG 2     die Kohärenzfunktion der beiden Zeitsignale in zwei Zeitabschnitten,

FIG 3     die zeitliche Entwicklung des Korrelationskoeffizienten der beiden gefilterten Zeitsignale im Falle eines Lastabwurfs,

FIG 4     die zeitliche Entwicklung des Korrelationskoeffizienten der beiden gefilterten Zeitsignale im Falle einer kontrollierten Gasturbinenabschaltung,

FIG 5     die zeitliche Entwicklung des Korrelationskoeffizienten mehrerer Brenner beim Zündvorgang,

FIG 6     die zeitliche Entwicklung des Korrelationskoeffizienten mehrerer Brenner beim Zündvorgang im Vergleich mit Daten von optischen Sensoren,

FIG 7    ein Blockdiagramm eines Verfahrens zum Überwachen eines Flammenzustands in einer Gasturbine,

FIG 8    eine Gasturbine,

FIG 9    die zeitliche Entwicklung des Autokorrelationskoeffizienten der Zeitsignale der Drucksensoren im Falle eines Lastabwurfs, und

FIG 10    die zeitliche Entwicklung des Autokorrelationskoeffizienten der Zeitsignale der Drucksensoren im Falle einer kontrollierten Gasturbinenabschaltung.

Gleiche Teile sind in allen Figuren mit denselben Bezugzeichen versehen.

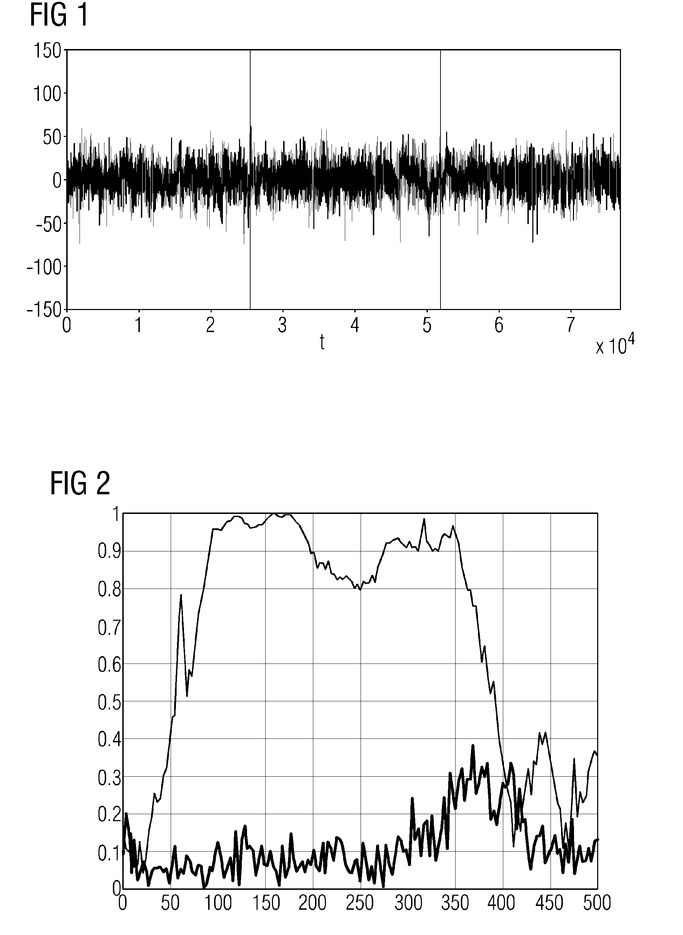

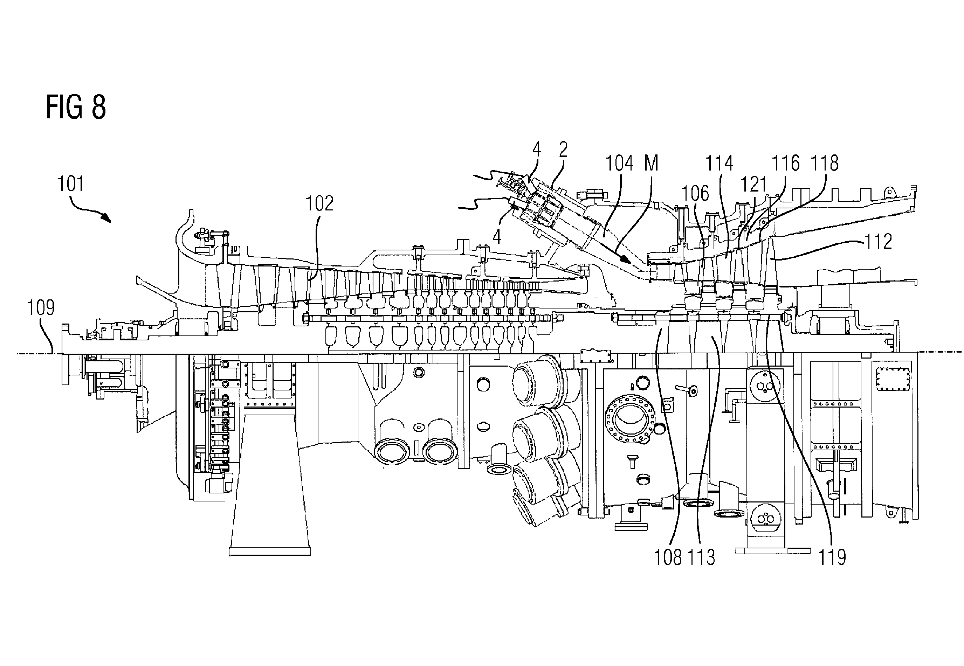

FIG 1 zeigt die Signale zweier dynamischer Drucksensoren, die für eine optimale, präzise Druckmessung auf Piezoelektrizität basieren. Alternativ kann eine andere Art von Sensoren als Drucksensoren verwendet werden, sofern sie einen Rückschluss auf den aktuellen Druckwert erlaubt, beispielsweise Thermoelemente, deren Signal auch in Abhängigkeit zum Drucksignal steht. Die dynamischen Drucksensoren sind an zwei verschiedenen Orten im Druckeinflussbereich eines Brenners in einer Gasturbine angeordnet. Unter Druckeinflussbereich wird hierbei ein Bereich verstanden, dessen Druckfluktuationen weitgehend von der Dynamik der Flamme des jeweiligen Brenners abhängen. Bei einer Gasturbine in can-annular-Bauweise kann dies beispielsweise ein Bereich innerhalb des jeweiligen Baskets des Brenners sein. Die Drucksensoren sind üblicherweise stromauf der Flamme angeordnet. Die Gasturbine wird in FIG 8 noch detailliert erläutert.

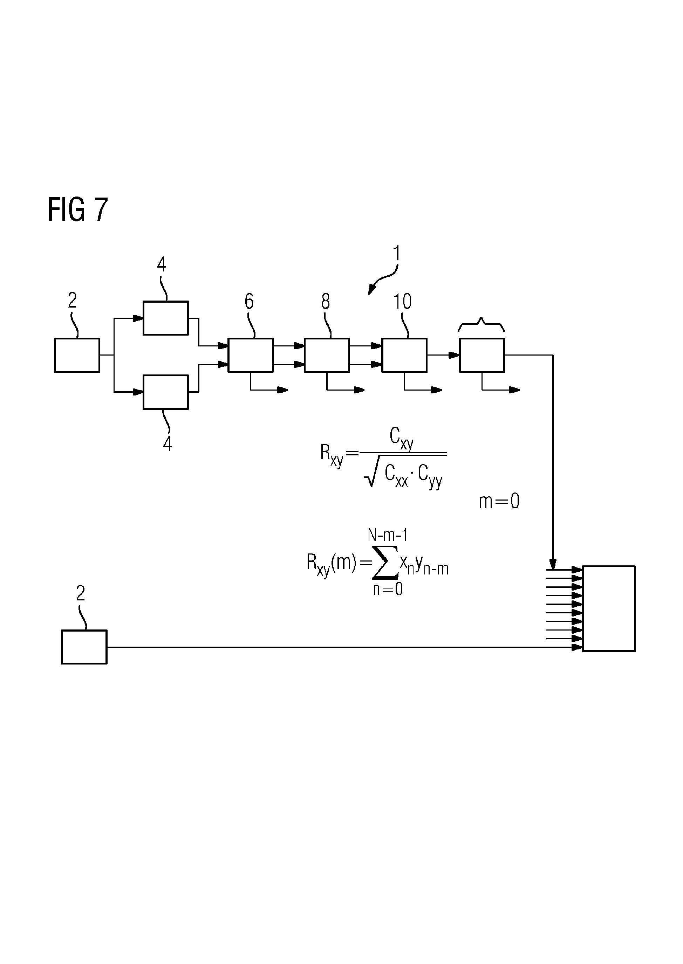

Die FIG 1 bis 6 zeigen jeweils Graphen. In FIG 1 ist das Signal beider dynamischer Drucksensoren gegen die Zeit aufgetragen. Da die Signale der Drucksensoren im in FIG 7 detailliert beschriebenen Ablauf des Verfahrens digitalisiert werden, ist die Skala der Abszisse hierbei direkt in 10.000 Abtastpunkten gehalten. Die Abtastfrequenz beträgt hier 25600 Hz. FIG 1 zeigt drei aufeinanderfolgende Datenblöcke von jeweils 1 Sekunde Länge. Im Verfahren werden kürzere Datenblöcke von 0,6 oder 0,3 Sekunden Länge verwendet, so dass im letzteren Fall eine Auswertung alle 0,3 Sekunden erfolgen kann.

Die Auswertung erfolgt jedoch nicht zwingend seriell, sondern die Zeitbereiche können auch überlappen. So können beispielsweise alle 0,3 Sekunden Datenblöcke von 0,6 Sekunden Länge ausgewertet werden. Dies ermöglicht eine schnelle Reaktionsgeschwindigkeit der Auswertung bei gleichzeitig guter Statistik.

FIG 2 zeigt ein Beispiel einer Filterung der Signale jeweils eines Datenblocks aus FIG 1. Zwei Zeitsignale in einem Datenblock, d. h. in einem gemeinsamen Zeitabschnitt werden Fourier-transformiert und Ihre Kohärenzfunktion berechnet. Die Formel der Kohärenzfunktion lautet

$$\gamma = \sqrt{\frac{G_{XY}^2}{G_{XX}\, G_{YY}}}.$$

Zwei Kohärenzfunktionen unterschiedlicher Datenblöcke, deren Werte zwischen 0 und 1 liegen können, sind im Graphen der FIG 2 aufgetragen, nämlich einmal für eine brennende Flamme (obere Kurve) und für eine erloschene Flamme (untere Kurve). Die Kohärenzfunktionen sind jeweils im Bereich von 0 bis 500 Hz aufgetragen.

FIG 2 zeigt deutlich die wesentlich höhere Kohärenz der Signale bei einer brennenden Flamme. Die Kohärenzfunktion liegt in einem weiten Bereich von ca. 80 bis 350 Hz oberhalb von 0,8, während sie bei erloschener Flamme nie über 0,4 steigt.

Die in FIG 2 gezeigte Kohärenzfunktion wird in dem in FIG 7 beschriebenen Ablauf zur Filterung des Signales genutzt. Außerhalb von Bereichen, in denen die Kohärenz bei brennender Flamme höher als 0,8 liegt, werden die Amplituden der Frequenzen in den Fourier-transformierten Datenblöcken auf 0 gesetzt. Anschließend werden die so bearbeiteten jeweiligen Datenblöcke mittels einer inversen Fourier-Transformation wieder in den Zeitraum transformiert und dort weiterverarbeitet.

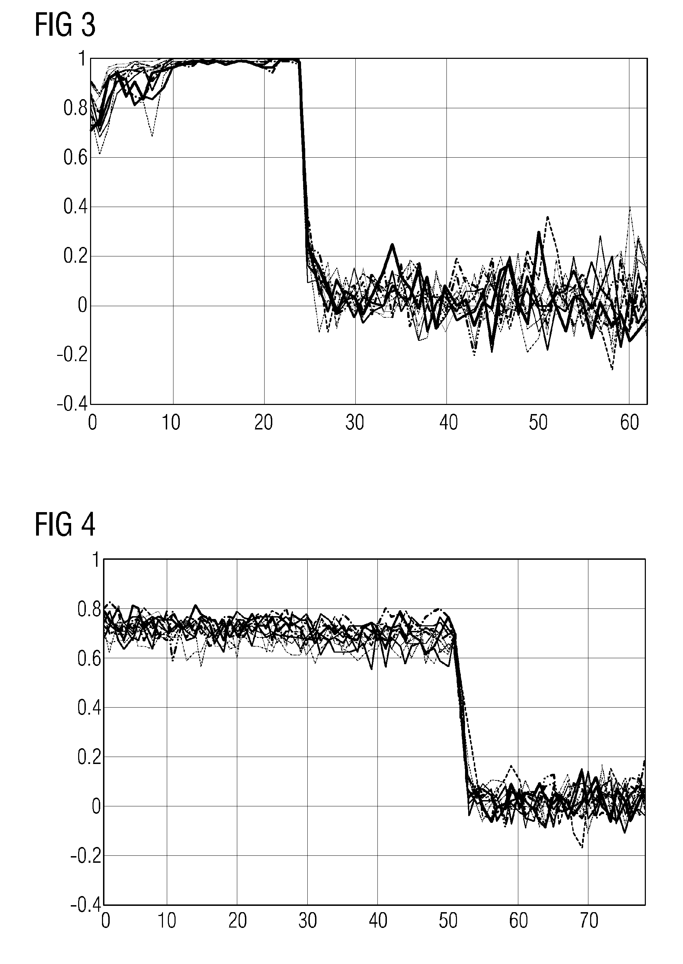

Die nun wieder im Zeitraum vorliegenden Signale werden für jeden Datenblock und jeden Brenner nun weiter bearbeitet. Es wird kontinuierlich aus den beiden Signalen jedes Brenners der Korrelationskoeffizient gebildet, jeweils pro Datenblock, so dass alle 0,3 Sekunden ein aktueller Korrelationskoeffizient vorliegt. Zeitliche Verläufe der Korrelationskoeffizienten sind in den FIG 3 bis 6 gezeigt.

FIG 3 bis 5 zeigen den zeitlichen Verlauf der Korrelationskoeffizienten für insgesamt zwölf verschiedene Brenner. Der Korrelationskoeffizient ist jeweils gegen die Zeit in Sekunden aufgetragen. Es erfolgte jeweils eine feste Bandpassfilterung der Signale zwischen 40 und 600 Hz.

FIG 3 zeigt den zeitlichen Verlauf für einen so genannten Trip, d. h. einen Schnellschluss beispielsweise als Folge einer Überschreitung eines Grenzwerts für einen Betriebsparameter wie der Drehzahl. Bei ca. 24 Sekunden erfolgt eine Schnellabschaltung der Gasturbine mit Unterbrechung der Kraftstoffzufuhr zu den Brennern. Die Grafik zeigt einen Anstieg der Kohärenz bis auf praktisch den Wert 1 ab Sekunde 10, was eine hohe Flammenintensität bedeutet. Dies entspricht dem erwarteten hochdynamischen Zustand während eines Trips. Ab dem Moment der Schnellabschaltung, in dem die Flammen erlöschen, sinkt die Kohärenz rapide ab und oszilliert um die Null. Die meisten Ausschläge sind dabei unter 0,2, niemals schlägt der Korrelationskoeffizient über 0,4 aus.

FIG 4 zeigt den zeitlichen Verlauf der Korrelationskoeffizienten der Brenner für eine normale, kontrollierte Abschaltung der Gasturbine. Während des normalen Betriebs schwanken die Korrelationskoeffizienten zwischen 0,6 und 0,8. Bei einer Abschaltung der Gasturbine mit Stoppen der Kraftstoffzufuhr zu den Brennern bei Sekunde 52 sinkt der Korrelationskoeffizient rapide auf Werte unter 0,2. Die Flammen sind erloschen.

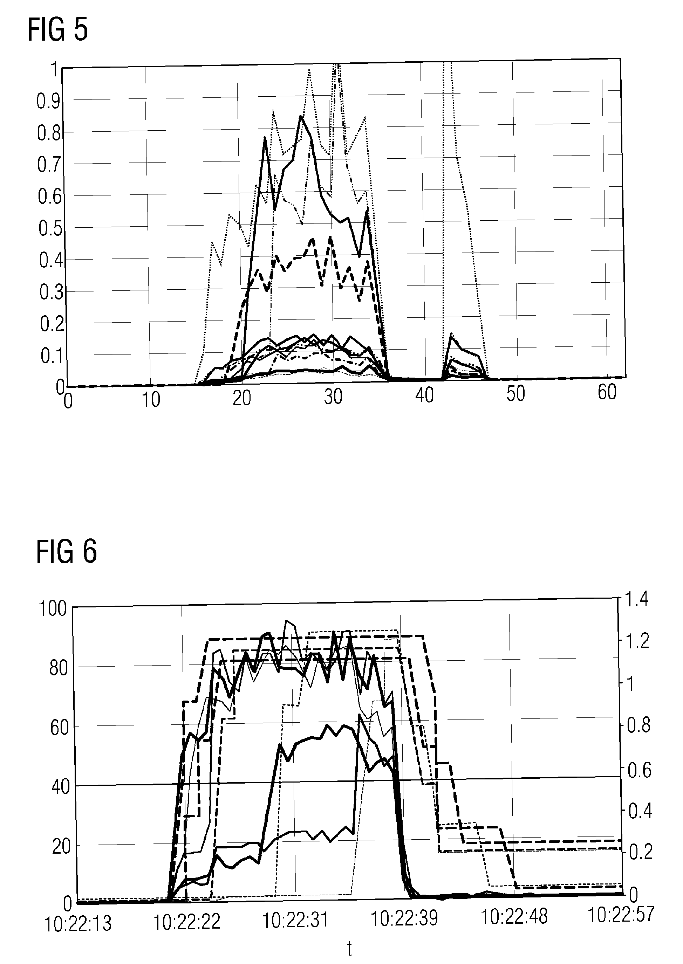

FIG 5 zeigt den zeitlichen Verlauf der Korrelationskoeffizienten für die Zündungsphase, d. h. das Anlaufen der Gasturbine. Bei Sekunde 15 findet die erste Zündung statt. Deutlich erkennbar ist die Überhöhung der Korrelationskoeffizienten von insgesamt vier Brennern gegenüber den übrigen Brennern. Nur diese Brenner haben im ersten Schritt gezündet, da ihre Korrelationskoeffizienten signifikant über einen Wert von 0,2 steigen. Auch die Zündzeitpunkte sind deutlich zu unterscheiden, ebenso das Erlöschen der Flammen bei Sekunde 35. Beim zweiten Zünden um Sekunde 43 zündet erkennbar nur ein einzelner Brenner.

FIG 6 zeigt eine alternative Methode der Überwachung während des Zündvorgangs. Hier wurden die quadratischen Mittel der Oszillationen während des Datenblocks ermittelt und mit dem Korrelationskoeffizienten gewichtet. Dieser Wert ist auf der rechten Ordinate markiert und entspricht in einem Bereich von 0 bis 1,4 einer auf der linken Ordinate aufgetragenen Flammenintensität von 0 % bis 100 %. Der Grenzwert für das Entzünden der Flamme wurde hierbei auf 40 % Flammenintensität gesetzt.

Gezeigt sind die mit dem Korrelationskoeffizienten gewichteten quadratischen Mittel der Drucksensoren verschiedener Brenner (durchgezogene Linien) im Vergleich mit Werten aus optischen Sensoren (gestrichelte Linien, gleiche Liniendicken entsprechen jeweils gleichen Baskets). Die Zeitachse ist hier in Stunden:Minuten:Sekunden angegeben. Beim Zündvorgang übertreten die aus den Drucksensoren wie beschrieben ermittelten Kurven den Grenzwert bis zu 1 Sekunde früher als die aus den optischen Sensoren ermittelten Werte. Das Zünden der Flamme wird also schneller erkannt. Noch deutlicher wird dieser Unterschied beim Erlöschen der Flamme etwa ab 10:22:37: Hier sind die aus den Drucksensoren gewonnenen Werte um bis zu 5 Sekunden vor den aus den optischen Sensoren gewonnenen Werten unterhalb des Grenzwertes. Die Erkennung einer erlöschenden Flamme ist mit dem beschriebenen Verfahren wesentlich schneller und erhöht somit deutlich die betriebliche Sicherheit der Gasturbine.

In allen oben genannten Anwendungen des Verfahrens gilt, dass die gewählten Grenzwerte für unterschiedliche Fahrweisen der Gasturbine adaptiv angepasst werden können. In einer Ausführungsform können beispielsweise für das Hochfahren der Gasturbine beim Zünden der Brennerflammen andere Grenzwerte gelten als im laufenden Betrieb. Hierdurch kann Erfahrungswerten hinsichtlich der unterschiedlichen Flammendynamik Rechnung getragen werden.

FIG 7 fasst das Verfahren 1 in einem Blockdiagramm zusammen: Für jeden Brenner 2 der Gasturbine existieren in dessen Druckeinflussbereich an zwei verschiedenen Positionen zwei dynamische Drucksensoren 4 auf piezoelektrischer Basis. Da die Anordnung und das Verfahren für alle Brenner 2 identisch sind, ist es nur am Beispiel des im oberen Teil der Zeichnung dargestellten Brenners 2 vollständig dargestellt. Die übrigen im Ausführungsbeispiel elf Brenner 2 sind als ein einziger Brenner 2 im Blockdiagramm zusammengefasst.

Die Signale der beiden Drucksensoren 4 werden in einen A/D-Wandler 6 gegeben und digitalisiert. Hier kommt eine Abtastfrequenz von 25600 Hz zur Anwendung. Anschließend werden die digitalisierten Daten in ein Vorverarbeitungsmodul 8 gegeben. Die Daten werden hier in Datenblöcke von ca. 0,3 bis 0,6 Sekunden Länge des jeweiligen Zeitabschnitts geteilt. Für jeden Datenblock findet eine Filterung mit einem festen Bandpassfilter zwischen beispielsweise 80 und 350 oder 80 und 600 Hz und/oder mit dem dynamischen Verfahren über die Kohärenz zeitgleicher Datenblöcke wie in FIG 2 beschrieben. Geeignete Auflösungen für die hier notwendigen Fourier-Transformationen liegen zwischen 1 und 6 Hz.

Die gefilterten Datenblöcke mit einer Länge von 0,3 bis 0,6 Sekunden Länge werden in ein Berechnungsmodul 10 gegeben. Dort wird aus den zeitgleichen Datenblöcken während des laufenden Betriebs (obere Formel) der Korrelationskoeffizient gebildet, während der Anlaufphase (untere Formel) werden mit dem Korrelationskoeffizienten gewichtete quadratische Mittelwerte gebildet. Somit ergibt sich pro Brenner für jeden Datenblock und damit Zeitbereich ein Wert. Dieser Wert wird in ein Auswertemodul 12 gegeben.

Sobald der eingegebene Wert über 0,4 steigt, wird als Ausgangssignal "Flame ON", d. h. Flamme aktiv ausgegeben. Sinkt der Wert unterhalb von 0,2, wird das Ausgangssignal auf "Flame OFF", d. h. Flamme erloschen ausgegeben. Im Auswertemodul 12 kann hierbei auch noch eine Mittelwertbildung über mindestens zwei aufeinanderfolgende Datenblöcke erfolgen, um statistische Schwankungen zu minimieren. Die Mittelung kann auch fortlaufend über mehrere Datenblöcke erfolgen und mit einer z. B. exponentiellen Gewichtung versehen sein, so dass aktuelle Datenblöcke höher gewichtet sind.

FIG 8 zeigt die Gasturbine 101. Die untere Hälfte der FIG 8 zeigt eine Aufsicht, die obere Hälfte eine Schnittzeichnung. Eine Gasturbine 101 ist eine Strömungsmaschine. Sie weist einen Verdichter 102 für Verbrennungsluft, eine Brennkammer 104 sowie eine Turbineneinheit 106 zum Antrieb des Verdichters 102 und eines nicht dargestellten Generators oder einer Arbeitsmaschine auf. Dazu sind die rotierenden Teile von Turbineneinheit 106 und Verdichter 102 auf dem Rotor 108 angeordnet, mit dem auch der Generator bzw. die Arbeitsmaschine verbunden ist, und der um seine Mittelachse 109 drehbar gelagert ist. Die im Ausführungsbeispiel in can-annular-Bauweise ausgeführte Brennkammer 104 umfasst eine Anzahl von rohrförmigen Einzelbrennkammern, so genannten Baskets. Jeder der Baskets ist mit einem Brenner 2 zur Verbrennung eines flüssigen oder gasförmigen Brennstoffs bestückt.

Die Turbineneinheit 106 weist eine Anzahl von rotierbaren Laufschaufeln 112 auf. Die Laufschaufeln 112 sind Teil des Rotors 108 und kranzförmig an Turbinenscheiben 113 angeordnet und bilden somit eine Anzahl von Laufschaufelkränzen oder -reihen. Weiterhin umfasst die Turbineneinheit 106 eine Anzahl von feststehenden Leitschaufeln 114, die ebenfalls kranzförmig unter der Bildung von Leitschaufelreihen an einem Leitschaufelträger 116 der Turbineneinheit 106 befestigt sind. Die Laufschaufeln 112 dienen dabei zum Antrieb des Rotors 108 durch Impulsübertrag vom die Turbineneinheit 106 durchströmenden Arbeitsmedium M. Die Leitschaufeln 114 dienen hingegen zur Strömungsführung des Arbeitsmediums M zwischen jeweils zwei in Strömungsrichtung des Arbeitsmediums M gesehen aufeinander folgenden Laufschaufelreihen oder Laufschaufelkränzen. Ein aufeinander folgendes Paar aus einem Kranz von Leitschaufeln 114 oder einer Leitschaufelreihe und aus einem Kranz von Laufschaufeln 112 oder einer Laufschaufelreihe wird dabei auch als Turbinenstufe bezeichnet.

Jede Leitschaufel 114 weist eine Plattform 118 auf, die zur Fixierung der jeweiligen Leitschaufel 114 an einem Leitschaufelträger 116 der Turbineneinheit 106 als Wandelement angeordnet ist. Jede Laufschaufel 112 ist in analoger Weise über eine auch als Schaufelfuß bezeichnete Plattform 119 an einer Turbinenscheibe 113 befestigt. Die Plattformen 118, 119 sind dabei thermisch vergleichsweise stark belastete Bauteile, die die äußere Begrenzung eines Heißgaskanals für das die Turbineneinheit 106 durchströmende Arbeitsmedium M bilden. Auch der Rotor 1, der von dem Heißgaskanal umschlossen wird, ist thermisch stark belastet, insbesondere bei transienten Vorgängen wie dem Anfahren der Gasturbine 101.

Zwischen den beabstandet voneinander angeordneten Plattformen 118 der Leitschaufeln 114 zweier benachbarter Leitschaufelreihen ist jeweils ein Ringsegment 121 an einem Leitschaufelträger 116 der Turbineneinheit 106 angeordnet. Die äußere Oberfläche jedes Ringsegments 121 ist dabei ebenfalls dem heißen, die Turbineneinheit 106 durchströmenden Arbeitsmedium M ausgesetzt und in radialer Richtung vom äußeren Ende der ihm gegenüber liegenden Laufschaufeln 112 durch einen Spalt beabstandet. Die zwischen benachbarten Leitschaufelreihen angeordneten Ringsegmente 121 dienen dabei insbesondere als Abdeckelemente, die das Innengehäuse im Leitschaufelträger 116 oder andere Gehäuse-Einbauteile vor einer thermischen Überbeanspruchung durch das die Turbine 106 durchströmende heiße Arbeitsmedium M schützen.

Die Brennkammer 104 ist wie bereits beschrieben im Ausführungsbeispiel als so genannte can-annular-Brennkammer ausgestaltet, bei der eine Vielzahl von in Umfangsrichtung um den Rotor 1 herum angeordneten Brennern 2 in einzelnen Baskets angeordnet sind, die austrittsseitig in die Turbineneinheit 106 münden. Hier sind jeweils zwei beschriebene Drucksensoren 4 pro Brenner 2 in deren jeweiligem Druckeinflussbereich, hier stromauf des Treibstoffeintritts angeordnet. Die Brennkammerform ist nicht entscheidend für die Anwendbarkeit des zuvor beschriebenen Verfahrens. Bei Gasturbinen 101 mit anderen Brennkammerformen wie z. B. Ringbrennkammern ist das Verfahren ebenso nutzbar.

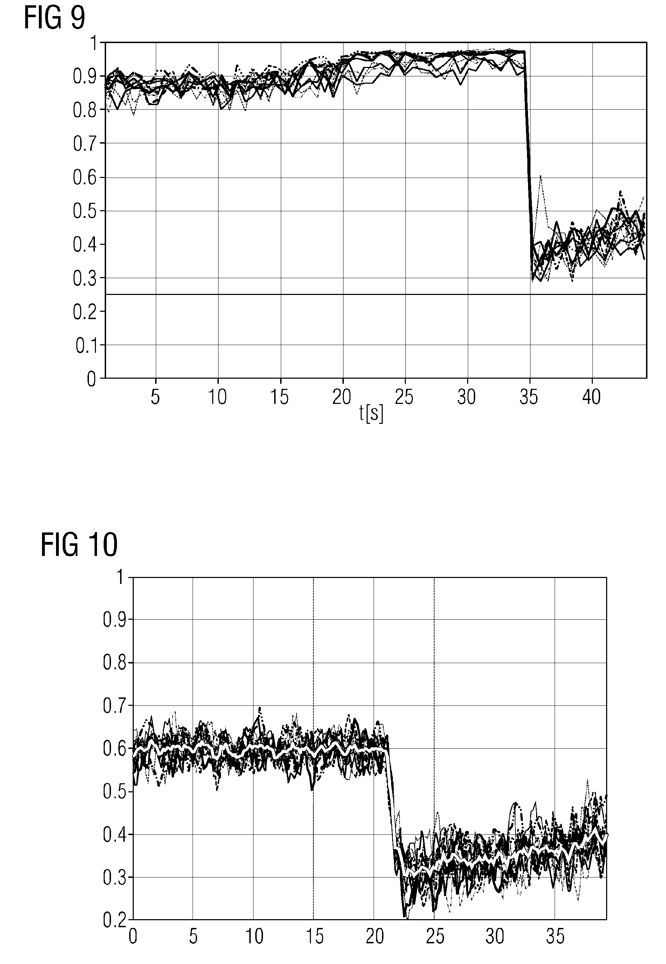

Ist pro Brenner 2 nur ein Drucksensor 4 vorgesehen oder fällt ein Drucksensor 4 aus, kann alternativ das Signal eines benachbarten Brenners 2 zur Korrelationsberechnung verwendet werden oder es kann eine Autokorrelation der Signale desselben Drucksensors 4 berechnet und verwendet werden. Dies ist in den FIG 9 und 10 gezeigt.

FIG 9 und 10 zeigen den zeitlichen Verlauf der Autokorrelationskoeffizienten für insgesamt zwölf verschiedene Brenner. Der Autokorrelationskoeffizient ist hier der Korrelationskoeffizient der Signale zweier gegeneinander versetzter Zeitabschnitte desselben Brenners. Der Autokorrelationskoeffizient ist jeweils gegen die Zeit in Sekunden aufgetragen.

FIG 9 zeigt analog zu FIG 3 den zeitlichen Verlauf für einen Trip. Bei ca. 34 Sekunden erfolgt eine Schnellabschaltung der Gasturbine mit Unterbrechung der Kraftstoffzufuhr zu den Brennern. Die Grafik zeigt einen Anstieg der Kohärenz bis auf fast den Wert 1 ab Sekunde 25, was eine hohe Flammenintensität bedeutet. Dies entspricht dem erwarteten hochdynamischen Zustand während eines Trips. Der Anstieg ist jedoch nicht ganz so deutlich wie in FIG 3, d. h. bei der Kreuzkorrelation zweier Sensoren. Ab dem Moment der Schnellabschaltung, in dem die Flammen erlöschen, sinkt die Kohärenz auf einen Wert um etwa 0,35 ab. Es kommen aber auch Ausschläge einzelner Signale über 0,5 vor. Auch hier ergeben sich also gegenüber FIG 3 höhere Kohärenzwerte bei erloschenen Flammen.

Ein ähnliches Bild mit noch deutlicheren Unterschieden ergibt sich in FIG 10. FIG 10 zeigt analog zu FIG 4 den zeitlichen Verlauf der Korrelationskoeffizienten der Brenner für eine normale, kontrollierte Abschaltung der Gasturbine. Während des normalen Betriebs schwanken die Korrelationskoeffizienten zwischen 0,5 und 0,7, also etwa 0,1 niedriger als bei der Kreuzkorrelation zwischen zwei Sensoren. Bei einer Abschaltung der Gasturbine mit Stoppen der Kraftstoffzufuhr zu den Brennern bei Sekunde 22 sinkt der Korrelationskoeffizient rapide auf Werte um etwa 0,35, ebenso wieder mit Ausschlägen über 0,5.

Die Autokorrelation eines Sensors ermöglicht also insgesamt noch eine stabile Aussage für den aktuellen Flammenzustand. Allerdings sind die sich ergebenden Werte nicht so deutlich wie bei der Korrelierung zweier unabhängiger Sensoren und die Grenzwerte müssen entsprechend angepasst werden. Sind also zwei Sensoren pro Brenner vorgesehen, sollte die Autokorrelation nur bei Ausfall eines Sensors verwendet werden. Allerdings macht die Nutzung der Autokorrelation eine softwareseitige Nachrüstung bestehender Gasturbinen mit nur einem Drucksensor pro Brenner möglich.

**Patentansprüche**

1. Verfahren (1) zur Überwachung eines Flammenzustands in einer Brennkammer (104) einer Gasturbine (101),
   wobei in einem Druckeinflussbereich eines Brenners (2) der Brennkammer (104) ein erster dynamischer Drucksensor (4) angeordnet ist und ein Signal des ersten Drucksensors (4) in einem ersten Zeitabschnitt ermittelt wird,
   **dadurch gekennzeichnet, dass**
   ein Signal eines zweiten dynamischen Drucksensors (4) in einem zweiten Zeitabschnitt ermittelt wird, eine für die lineare Abhängigkeit der beiden ermittelten Signale charakteristische Wertzahl ermittelt wird, und
   bei Unterschreiten eines ersten vorgegebenen Grenzwerts durch die Wertzahl ein Erlöschen und/oder bei Überschreiten eines zweiten vorgegebenen Grenzwerts ein Zünden der Flamme des Brenners (2) festgestellt wird.

2. Verfahren (1) nach Anspruch 1,
   bei dem bei der Ermittlung der Wertzahl der Korrelationskoeffizient der beiden ermittelten Signale berechnet wird.

3. Verfahren (1) nach Anspruch 1 oder 2,
   bei dem der erste und der zweite Zeitabschnitt zumindest teilweise überlappen, insbesondere gleich sind.

4. Verfahren (1) nach einem der vorhergehenden Ansprüche, bei dem der erste und/oder zweite Zeitabschnitt kürzer als 1 s, insbesondere zwischen 0,3 und 0,6 s lang ist.

5. Verfahren (1) nach einem der vorhergehenden Ansprüche, bei dem die Signale digitalisiert werden.

6. Verfahren (1) nach Anspruch 5,
   bei dem die Frequenz der Digitalisierung mehr als 10 kHz, insbesondere mehr als 20 kHz beträgt.

7. Verfahren (1) nach einem der vorhergehenden Ansprüche, bei dem aus dem ersten und/oder dem zweiten Signal für den Flammenzustand nicht charakteristische Frequenzbereiche ausgefiltert werden.

8. Verfahren (1) nach Anspruch 7,
   bei dem Frequenzbereiche unterhalb von 80 Hz und/oder oberhalb von 350 Hz, insbesondere oberhalb von 600 Hz ausgefiltert werden.

9. Verfahren (1) nach Anspruch 7 oder 8,
   bei dem Frequenzbereiche ausgefiltert werden, in denen die Kohärenz der beiden ermittelten Signale unterhalb eines vorgegebenen Kohärenzgrenzwerts, insbesondere 0,8 liegt.

10. Verfahren (1) nach einem der Ansprüche 2 bis 9,
    bei dem der Grenzwert niedriger als 0,4, insbesondere niedriger als 0,2 ist.

11. Verfahren (1) nach einem der Ansprüche 2 bis 10,
    bei dem bei der Ermittlung der Wertzahl der Korrelationskoeffizient mit dem quadratischen Mittel des ersten und/oder des zweiten ermittelten Signals normiert wird.

12. Gasturbine (101) mit einem in einem Flammaustrittsbereich eines Brenners (2) einer Brennkammer (104) angeordneten ersten dynamischen Drucksensor (4),
    **dadurch gekennzeichnet, dass**
    in der Gasturbine (101) ein zweiter dynamischer Drucksensor (4) angeordnet ist und die Gasturbine (101) eine Steuereinrichtung aufweist, die zum Durchführen des Verfahrens nach einem der Ansprüche 1 bis 11 ausgelegt ist.

13. Gasturbine (101) nach Anspruch 12,
    bei der der zweite Drucksensor (4) im Druckeinflussbereich eines dem Brenner (2) benachbarten zweiten Brenners (2) angeordnet ist.

14. Gasturbine (101) nach Anspruch 12,
    bei dem der zweite Drucksensor (4) in dem Druckeinflussbereich des Brenners (2) angeordnet ist.

15. Kraftwerksanlage mit einer Gasturbine (101) nach einem der Ansprüche 12 bis 14.

FIG 1

FIG 2

FIG 3

FIG 4

## FIG 5

## FIG 6

## FIG 7

$$R_{xy} = \frac{C_{xy}}{\sqrt{C_{xx} \cdot C_{yy}}}$$

$$m = 0$$

$$R_{xy}(m) = \sum_{n=0}^{N-m-1} x_n y_{n-m}$$

FIG 8

EP 2 789 914 A1

FIG 9

FIG 10

**EP 2 789 914 A1**

Europäisches
Patentamt
European
Patent Office
Office européen
des brevets

## EUROPÄISCHER RECHERCHENBERICHT

Nummer der Anmeldung

EP 13 16 3529

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 7 853 433 B2 (HE CHENGLI [US] ET AL) 14. Dezember 2010 (2010-12-14)<br>* Spalte 1, Zeile 50 - Spalte 2, Zeile 9 *<br>* Spalte 5, Zeile 18 - Spalte 6, Zeile 13 *<br>* Spalte 6, Zeile 28 - Spalte 7, Zeile 28 *<br>* Spalte 7, Zeile 48 - Spalte 8, Zeile 12 *<br>* Spalte 11, Zeile 8 - Spalte 12, Zeile 8 *<br>* Spalte 12, Zeile 55 - Zeile 60 *<br>* Abbildungen 2-5 *<br>----- | 1-14 | INV.<br>F23N5/16<br>F23N5/24 |
| X | US 2012/088197 A1 (BYRD DOUGLAS SCOTT [US] ET AL) 12. April 2012 (2012-04-12)<br>* Seite 2, Absatz 18 - Seite 3, Absatz 30 *<br>* Abbildungen 1-4 *<br>----- | 1,5,12, 13,15 | |
| X | DE 10 2007 034737 A1 (GEN ELECTRIC [US]) 29. Januar 2009 (2009-01-29)<br>* Seite 9, Absatz 47 *<br>* Seite 10, Absatz 53 - Seite 11, Absatz 57 *<br>* Abbildungen 2,5,7 *<br>----- | 1,5,12, 14 | RECHERCHIERTE SACHGEBIETE (IPC)<br><br>F23N |

Der vorliegende Recherchenbericht wurde für alle Patentansprüche erstellt

| Recherchenort | Abschlußdatum der Recherche | Prüfer |
|---|---|---|
| München | 9. September 2013 | Gavriliu, Costin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

15

**ANHANG ZUM EUROPÄISCHEN RECHERCHENBERICHT
ÜBER DIE EUROPÄISCHE PATENTANMELDUNG NR.**

EP 13 16 3529

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-09-2013

| Im Recherchenbericht angeführtes Patentdokument | Datum der Veröffentlichung | Mitglied(er) der Patentfamilie | | Datum der Veröffentlichung |
|---|---|---|---|---|
| US 7853433 B2 | 14-12-2010 | CN | 102187157 A | 14-09-2011 |
| | | EP | 2342498 A1 | 13-07-2011 |
| | | US | 2010076698 A1 | 25-03-2010 |
| | | WO | 2010036285 A1 | 01-04-2010 |
| US 2012088197 A1 | 12-04-2012 | CN | 102444908 A | 09-05-2012 |
| | | DE | 102011054252 A1 | 12-04-2012 |
| | | FR | 2965891 A1 | 13-04-2012 |
| | | JP | 2012082824 A | 26-04-2012 |
| | | US | 2012088197 A1 | 12-04-2012 |
| DE 102007034737 A1 | 29-01-2009 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7853433 B2